# EUROPÄISCHE PATENTSCHRIFT

(11) **EP 4 170 311 B1**
(45) Veröffentlichungstag und Bekanntmachung des Hinweises auf die Patenterteilung: **04.06.2025**
(21) Anmeldenummer: 21204158.6
(22) Anmeldetag: 22.10.2021
(51) Int. Cl.: G01M 3/00, G01M 3/40, F24T 10/17

(54) **VERFAHREN UND ANORDNUNG ZUM PRÜFEN MINDESTENS EINER DRUCKROHRLEITUNG**
METHOD AND DEVICE FOR TESTING AT LEAST ONE PIPE UNDER PRESSURE
PROCÉDÉ ET AGENCEMENT DE VÉRIFICATION D'AU MOINS UNE CONDUITE DE REFOULEMENT

(43) Veröffentlichungstag der Anmeldung: 26.04.2023
(73) Patentinhaber: Bauer Resources GmbH, 86529 Schrobenhausen (DE)
(72) Erfinder: KAISER, Holger, 18055 Rostock (DE)
(74) Vertreter: Wunderlich & Heim Patentanwälte PartG mbB

(56) Entgegenhaltungen:
- KR-A- 20200 090 543
- KR-B1- 102 014 763

## Beschreibung

Die Erfindung betrifft ein Verfahren zum Prüfen mindestens einer Druckrohrleitung gemäß dem Oberbegriff des Anspruchs 1.

Zur Wärmegewinnung und Kühlung, insbesondere zur Beheizung und Kühlung von Gebäuden, werden vermehrt oberflächennahe Geothermieanlagen eingesetzt. Dies können Erdwärmesonden oder thermisch aktivierte Fundamente sein, in dem ein Druckrohrsystem vorhanden ist, durch das ein Wärmeträgermedium ("Fluid") Wärme oder Kälte mit dem umliegenden Untergrund austauscht. Die Druckrohrsysteme weisen in vielen Fällen U-förmig, spiralförmig oder koaxial geformte Druckrohrleitungen auf, welche vertikal oder schräg im Untergrund angeordnet sind. Horizontale Systeme in Mäanderform werden auch gebaut. Diese Druckrohrsysteme, ob vertikal, schräg oder horizontal, werden durch weitere im Boden vergrabene Leitungen an die Übergabestellen zum Gebäude oder zu einer Wärmepumpenanlage angeschlossen.

Die Druckrohrsysteme einschließlich Anschlussleitungen befinden sich etwa in Bohrlöchern mit bis zu 400 m Tiefe. Diese werden in unterirdische Betonbauteile, wie etwa Bohrpfähle, einbetoniert oder im Untergrund - auch unter Gebäuden - eingegraben. In jedem Fall sind die verlegten Druckrohrleitungen für eine nachträgliche Reparatur nur schwer bis gar nicht zugänglich.

Eine Verlegung von Druckrohrleitungen im Untergrund, unter oder in Gebäuden gibt es auch im Trink- und Abwasser-, Gas- und Fernwärmebereich.

Werden Druckrohrleitungen verlegt, müssen beim Bau Verbindungen einzelner Rohrstränge druckdicht erstellt werden. Das geschieht in der Regel mit Muffen, die verschweißt oder verpresst werden. In größeren Dimensionen werden auch andere Verschlüsse oder Absperreinheiten verwendet.

Dabei können 5% bis 30% der Druckrohrleitungen nach Einbau nicht dicht sein. Ursache können Beschädigungen der Druckrohrleitung oder fehlerhafte Verbindungen im Druckrohrleitungssystem sein. Durch Druckprüfungen während des Baus kann der Anteil der Leitungen, die nach Abschluss der Arbeit undicht sind, auf 5% bis 10% reduziert, im Idealfall auf null herabgesetzt werden.

Aus diesem Grunde werden die Druckrohrsysteme mit dem Baufortschritt mittels Druckprüfung mehrfach auf Dichtheit geprüft.

Die Dichtheitsprüfung erfolgt in der Weise, dass ein Ende der Druckrohrleitung mit einer Endkappe fest verschlossen wird, während am anderen Ende eine Endkappe mit Ventil angebracht wird, an dem ein Manometer angeschlossen werden kann. Davor wurde die Druckrohrleitung mit einem Fluid befüllt. Für die Druckprüfung wird über das Ventil Luft in die Druckrohrleitung gepresst. Mit dem Manometer wird überwacht, ob sich ein Druckverlust zeigt. Da die Druckrohrsysteme meist aus Kunststoff, insbesondere PE, PP oder PVC bestehen, also einem Material, das sich unter Druck verformen kann und darf, sind für die Dichtheitsprüfungen Verfahren vorgeschrieben, die mehrere fortlaufende Druckmessungen über einen längeren Zeitraum verlangen. Da bei Bauvorhaben durchaus einige 100 Geothermiesonden mit Druckrohrleitungen verbaut werden, die in verschiedenen Bauphasen mit jeweils mehreren Messungen zu kontrollieren sind, können bis zu 10 000 einzelne Messwerte erforderlich werden. Dies ist sehr zeit- und arbeitsintensiv.

Weiter besteht das Problem, dass während eine Geothermiesonde eingebracht, verpresst, mit dem Bewehrungskorb bewegt oder einbetoniert wird, eine händische oder drahtgebundene Messung nur sehr schwer oder gar nicht möglich ist. Dies ist ein Nachteil, denn es ist naheliegend, dass es gerade bei diesen Arbeitsgängen zu Beschädigungen kommen kann, die somit erst im Nachhinein festgestellt werden können.

Andere Verfahren der Dichtheitsprüfung sind in Abhängigkeit von Leitungsdimension, Fluid und Drücken möglich. Es werden anstelle der Endkappen andere Verschlüsse oder Absperreinheiten wie Absperrventile oder Kugelhähne verwendet. Über angeschlossene Befülleinrichtungen wie Schläuche, Leitungen wird ein Fluid mit Druck in das Druckrohr eingebracht. Dabei wird der Druck mit einem Manometer mit mehrere fortlaufende Druckmessungen über einen längeren Zeitraum überprüft.

Aus der KR 2020 0090543 ist ein Prüfverfahren für bereits installierte Geothermiedruckleitungen angegeben. Hierbei werden die zu prüfenden Leitungsabschnitte mit Expansionsstopfen druckdicht abgesperrt und ein Prüfmedium eingebracht. Der Drucksensor ist unmittelbar am Absperrstopfen angebracht.

Die KR 102 014 763 zeigt einen ähnlichen Aufbau zur Leckageprüfung von Abwasserleitungen.

Der Erfindung liegt die **Aufgabe** zugrunde, ein Verfahren anzugeben, mit welchen eine Druckrohrleitung besonders zuverlässig und effizient geprüft werden kann.

Die Aufgabe wird durch ein Verfahren mit den Merkmalen des Anspruchs 1 gelöst. Bevorzugte Ausführungsformen der Erfindung sind in den abhängigen Ansprüchen angegeben.

Gemäß der Erfindung ist ein Verfahren zum Prüfen mindestens einer Druckrohrleitung vorgesehen, bei dem an einem Ende der Druckrohrleitung eine Messeinrichtung mit mindestens einem Messsensor und einer drahtlosen Datenübertragungseinheit angebracht wird und die Druckrohrleitung mit Fluid befüllt und unter Druck gesetzt wird, wobei mit der Messeinrichtung zumindest ein Druck in der Druckrohrleitung erfasst und kontinuierlich oder zu vorgegebenen Zeitpunkten erfasste Messdaten an eine beabstandete zentrale Rechnereinheit drahtlos übertragen werden.

Eine Grundidee der Erfindung liegt darin, ein automatisiertes Prüfen einer oder einer Vielzahl von Druckrohrleitungen mit einer speziellen Messeinrichtung durchzuführen. Dabei wird eine erfindungsgemäße Messeinrichtung an einem Ende der mindestens einen Druckohrleitung angebracht. Die Druckrohrleitung wird mit Fluid befüllt und unter Druck gesetzt. Über mindestens einen Messsensor der Messeinrichtung und eine drahtlose Datenübertragungseinheit werden Messdaten erfasst und drahtlos an eine weitere, beabstandete Datenübertragungseinheit übertragen, die mit einer zentralen Rechnereinheit verbunden ist. Die Rechnereinheit kann mit einer entsprechenden Analyseeinheit, insbesondere einer entsprechenden Software, versehen sein, welche die empfangenen Messdaten auswertet und eine Undichtigkeit in der mindestens einen Druckrohrleitung feststellen kann.

Durch das automatisierte Messen und Abfragen können insbesondere bei einer Vielzahl von Druckrohrleitungen eventuell auftretende Schäden und Undichtigkeiten effizient und frühzeitig festgestellt werden. Dies erlaubt gegebenenfalls Nacharbeiten an einer Druckrohrleitung zu einem sehr frühen Zeitpunkt, an dem noch Nacharbeiten möglich und mit relativ geringem Aufwand durchführbar sind. Insgesamt können so in besonders effizienter Weise eine oder mehrere Druckrohrleitungen effizient und in hoher Qualität erstellt werden.

Eine bevorzugte Ausführungsform der Erfindung besteht darin, dass die Messeinrichtung mit einem Datenspeicher und einem Akkumulator zur Energieversorgung versehen ist, wobei Messdaten in dem Datenspeicher zwischengespeichert und zu bestimmten Zeitpunkten übertragen werden. Die Messeinrichtung kann dabei als eine im Wesentlichen autarke Einheit mit einem Akkumulator zur Versorgung mit elektrischer Energie über einen längeren Zeitraum von mehreren Tagen oder mehreren Wochen ausgebildet sein.

Mittels eines Datensprechers könnten Messdaten zunächst lokal abgespeichert werden, welche beispielsweise dann auf Anforderung durch eine zentrale Rechnereinheit oder vorgegeben durch einen zentrale Prozesseinheit oder eine interne Zeituhr übertragen werden.

Nach einer weiteren bevorzugten Variante der Erfindung ist es vorgesehen, dass mittels der Messeinrichtung die Temperatur und/oder weitere Zustandsparameter zu dem befüllten Fluid und/oder der Druckrohrleitung erfasst werden. Beispielsweise können auch eine Füllstandhöhe des Fluids in der Druckrohrleitung, ein Schwingungsverhalten oder eine elektrische Leitfähigkeit des Fluids und insbesondere eine Veränderung der elektrischen Leitfähigkeit erfasst werden. Auch diese weiteren Parameter können Informationen zu einer möglichen Beschädigung liefern.

Gemäß der Erfindung wird an dem anderen Ende der Druckrohrleitung eine Befülleinrichtung angebracht. Somit sind an der Druckrohrleitung an dem einen Ende die Messeinrichtung und an dem anderen Ende die Befülleinrichtung vorgesehen. Die Befülleinrichtung kann dabei im einfachsten Fall ein Ventil sein. Durch das Ventil kann ein Fluid, insbesondere eine Flüssigkeit und/oder ein Gas über eine Zuführeinrichtung eingeleitet werden. Nach dem Trennen der Zuführeinrichtung kann durch das Ventil ein druckdichter Abschluss gewährleistet sein. Liegt eine Leckage der Druckrohrleitung vor, so kann durch die Messeinrichtung ein Druckabfall in einem vorgegebenen Zeitraum als Maß für eine mögliche Beschädigung erfasst werden.

Besonders vorteilhaft ist es nach einer Weiterbildung des erfindungsgemäßen Verfahrens, dass eine Vielzahl von Druckrohrleitungen mit jeweils einer Messeinrichtung vorgesehen und geprüft wird. Insbesondere bei einer Vielzahl von verbauten Druckrohrleitungen, welche miteinander zu einem Druckrohrleitungssystem verbunden sind, kann über das erfindungsgemäße automatisierte Prüfen eine erhebliche Ersparnis an Personalaufwand, Kosten und Zeit bei gleichzeitig hoher Prüfgenauigkeit erreicht werden.

Weiter besteht eine vorteilhafte Variante des erfindungsgemäßen Verfahrens darin, dass über die zentrale Rechnereinheit die mindestens eine Messeinrichtung zur Messung und/oder Datenübertragung veranlasst wird und dass durch die zentrale Rechnereinheit analysiert wird, ob eine Undichtigkeit in der Druckrohrleitung gegeben ist. Die Rechnereinheit, welche insbesondere einen Computer umfasst, ist mit einer entsprechenden Analysesoftware versehen. Insbesondere beim Durchführen einer vorgegebenen Anzahl von Prüfschritten über einen vorgesehenen Prüfzeitraum kann bei Auftreten von übermäßigen Druckänderungen und Druckabfällen in einer Druckrohrleitung mit hoher Sicherheit eine Beschädigung ermittelt werden. Die Rechnereinheit kann aus einer Vielzahl von Druckrohrleitungen somit einzelne beschädigte Druckrohrleitungen identifizieren, so dass diese Beschädigungen frühzeitig und zielgerichtet beseitigt werden können.

Grundsätzlich kann die mindestens eine Druckrohrleitung für unterschiedliche Zwecke eingesetzt werden, so etwa für ein Trink- oder Abwassersystem, ein Gasleitungssystem oder ein Fernwärmeleitungssystem. Besonders vorteilhaft ist es nach einer Ausführungsvariante der Erfindung, dass die Druckrohrleitungen im Boden insbesondere als Teil einer Geothermieanlage ausgebildet werden. Die einzelnen Druckrohrleitungen können dabei als Wärmetauscherelemente mit einer U-Form, einer Mäanderform, einer Helixform oder eine sonstigen geeigneten Leitungsform ausgebildet sein. Durch entsprechende Verbindungsleitungen können so einzelne Druckrohrleitungen zu einer Geothermieanlage oder einem Leitungssystem zusammengeschlossen werden.

Generell können die Messeinrichtungen erst nach dem Erstellen und Einbringen der Druckrohrleitungen in den Boden zur Prüfung angebaut werden. Besonders vorteilhaft ist es nach der Erfindung, dass die Messeinrichtungen bereits beim Einbringen der Druckrohrleitung(en) in den Boden eingesetzt werden. Somit können bereits zu einem sehr frühen Zeitpunkt eventuelle Beschädigungen an den Druckrohrleitungen festgestellt werden.

Besonders vorteilhaft ist es nach einer Ausführungsform der Erfindung, dass die mindestens eine Messeinrichtung mit einer Schutzabdeckung versehen wird. Insbesondere bei einem rauen Baustellenbetrieb kann so eine Beschädigung der grundsätzlich empfindlichen Messeinrichtung verhindert werden. Eine Schutzabdeckung, etwa aus Kunststoff oder Metall, kann dabei die Messeinrichtung nicht nur vor mechanischen Beschädigungen, sondern auch vor Witterungseinflüssen und insbesondere vor Feuchtigkeit schützen.

Eine besonders wirtschaftliche Verfahrensvariante wird weiter dadurch erzielt, dass die Messeinrichtungen von der Vielzahl von Druckleitungen entfernt und die Druckleitungen zu einem Druckrohrleitungssystem verbunden werden. Die Messeinrichtungen sind dabei grundsätzlich lösbar an der jeweiligen Druckrohrleitung angeschlossen. Dies kann beispielsweise über ein Gewinde, insbesondere ein Rohrgewinde, erfolgen. Nach dem Lösen der Messeinrichtungen können die entsprechenden Gewinde zum Anbringen von Muffen für Verbindungsleitungen vorgesehen werden.

Zur Ausführung der Erfindung ist weiterhin beispielsweise eine Anordnung zum Prüfen mindestens einer Druckrohrleitung vorgesehen, wobei an einem Ende der Druckrohrleitung eine Messeinrichtung mit mindestens einem Messsensor und einer drahtlosen Datenübertragungseinheit angebracht ist, die Druckrohrleitung mit einem Fluid befüllt und unter Druck gesetzt ist und eine von der mindestens einen Messeinrichtung beabstandete zentrale Rechnereinheit vorgesehen ist, an welche von der Messeinrichtung erfasste Messdaten kontinuierlich oder zu vorgegebenen Zeitpunkten übertragbar sind.

Mit der Anordnung kann insbesondere das zuvor beschriebene erfindungsgemäße Verfahren und die Ausführungsformen hierzu durchgeführt werden. Dabei können die zuvor dargelegten Vorteile erzielt werden.

Mit der Erfindung wird es vorzugsweise ermöglicht, eine Druck- und gegebenenfalls Temperaturmessung während der gesamten Bauphase durchzuführen. Dabei wird der Bauablauf nicht gestört. Zudem werden durch eine automatische Datenübertragung in ein geeignetes EDV-System eine Speicherung, Dokumentation und Auswertung ermöglicht.

Ein Aspekt der Erfindung besteht also darin, dass an einem Ende der Druckrohrleitung oder des Druckrohrsystems ein Bauteil eingebaut wird, das einen Druck- und Temperatursensor und vorzugsweise eine zentrale Prozesseinheit, einen Speicher, eine Funkeinheit und einen Akkumulator enthält. Das Bauteil ist so gebaut, dass Druck- und/oder Temperatursensor Druck und Temperatur außerhalb des Bauteils messen können, das Bauteil jedoch wasserdicht ist und nicht durch den außen aufgebrachten Druck beschädigt wird. Mechanisch ist der Sensor so gestaltet, dass er nicht in die Druckrohrleitung oder das Druckrohrsystem hineinfallen kann. Die Reichweite der Funkeinheit ist groß genug, um die Daten in Echtzeit oder zu festgelegten Zeitpunkten an eine zentrale Stelle des Bauvorhabens zu übertragen, insbesondere mit einer LoRaWAN-Technologie.

Der Akkumulator kann wenige Stunden bis mehrere Wochen Strom für die Elemente im Bauteil liefern. Der Speicher kann Daten für wenige Stunden bis mehrere Wochen aufnehmen. Die Druckrohleitung bzw. das Druckrohrsystem enthält ferner weiterhin ein Ventil oder eine Absperreinheit, durch die ein Fluid eingebracht werden kann bzw. das System mit Druck beaufschlagt werden kann. Zweckmäßigerweise ist dieses Ventil am anderen Ende der Leitung angebracht. Eine Anbringung des Ventils seitlich vom Rohr z.B. über eine Anbohrschelle ist ebenfalls möglich.

Zur Betonage eines Bohrpfahls werden die beiden Enden mit einem Sicherungsrohr oder einer Abdeckung geschützt. Dies kann ohnehin erforderlich sein und dazu dienen, nach der Betonage an die beiden Rohrenden zu gelangen, um daran weitere Leitungen anzuschließen.

Nach Herstellung eines Bohrpfahls oder eines anderen Betonbauteils sowie nach Beendigung der Messungen wird das Sicherungsrohr entfernt, die Endkappen werden entfernt, Leitungen angeschlossen und an die Leitungsenden die Endkappen mit Ventil bzw. Drucksensor erneut angeschlossen. Ebenso wird beim Verlängern von Leitungen verfahren. Somit können Ventil und Sensor beliebig oft verwendet werden.

Folgende Vorteile können erzielt werden:
1. Die Vielzahl der aufzunehmenden Daten kann gleich digital erfasst, dokumentiert und weiterverarbeitet werden.
2. Es lässt sich in Echtzeit, oder bei Empfangsstörungen zumindest nachträglich, feststellen, wann genau eine Druckrohrleitung oder das Druckrohrsystem undicht geworden ist. Damit lassen sich Ursachen für Beschädigungen identifizieren.
3. Durch zeitaufgelöste Überwachung anderer Parameter, wie Temperatur, lassen sich auch andere mögliche Schädigungen zuordnen.
4. Das Verfahren ist vorrangig für Geothermie- aber auch für Trink- und Abwasser-, Gas- und Fernwärmeanlagen anwendbar. Überall dort, wo Druckrohrleitungen eingebaut werden. Vorrangig im Untergrund jedoch auch oberirdisch.

Die Erfindung wird nachfolgend anhand von bevorzugten Ausführungsbeispielen weiter erläutert, welche schematisch in den Zeichnungen dargestellt sind. In den Zeichnungen zeigen:
- Fig. 1: eine erfindungsgemäße Anordnung mit einer Druckrohrleitung und einer Rechnereinheit, die über zwei Datenübertragungseinheiten kommunizieren,
- Fig. 2: zwei Endbereiche einer Druckrohrleitung nach der Erfindung, und
- Fig. 3: eine schematische Darstellung einer Messeinrichtung für die Druckrohrleitung in einem vergrößerten Maßstab.

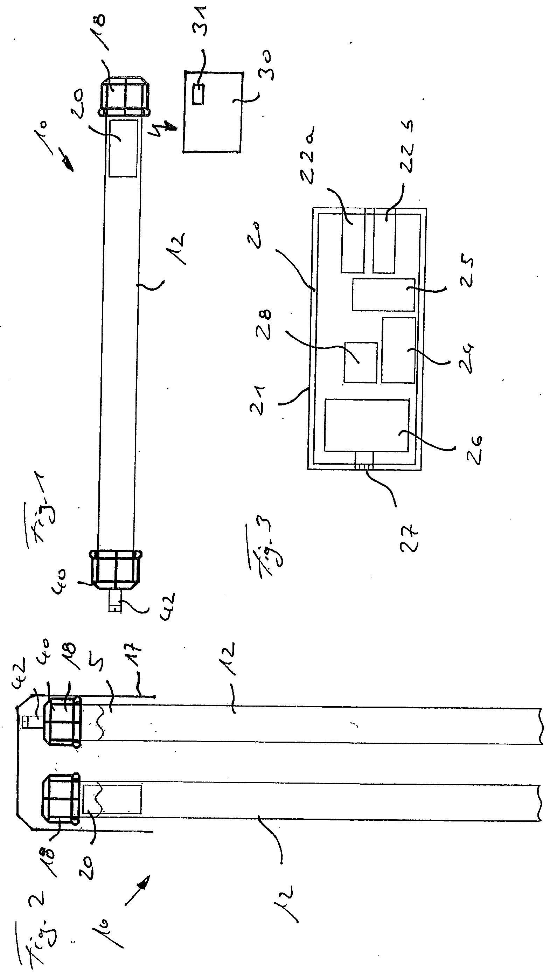

Gemäß den Figuren 1 und 2 umfasst eine Anordnung 10 zum erfindungsgemäßen Prüfen eine Druckrohrleitung 12, welche aus einem Kunststoff, einem Verbundstoff oder einem Metall gebildet sein kann. Zur Dichtigkeitsprüfung wird die Druckrohrleitung 12 mit einem Fluid vollständig oder teilweise befüllt, wobei an einem Endbereich eine Messeinrichtung 20 eingesetzt und das Ende der Druckrohrleitung 12 mit einem kappenförmigen Verschluss 18 druckdicht verschlossen wird. Das andere Ende der Druckrohrleitung 12 wird mit einem deckel- oder kappenartigen Verschluss mit Befülleinrichtung 40 druckdicht verschlossen, wobei die Befülleinrichtung 40 als ein Ventil 42 zum Einleiten einer Flüssigkeit oder eines Gases unter Druck in die Druckrohrleitung 12 ausgebildet ist. Eine Schutzabdeckung 17 schützt die Verschlüsse 18 und 40 und das Ventil 42 vor Beschädigung.

Bei Vorliegen einer Undichtigkeit wird sich in der so vorbereiteten Druckrohrleitung 12 ein allmählicher Druckabfall einstellen, welcher über die Messeinrichtung 20 festgestellt werden kann. Die Messeinrichtung 20 kann bei entsprechender Ausbildung in dem Fluid 5 mit dem angedeuteten Füllstand aufschwimmen, an der Druckrohrleitung 12 und/oder an dem Verschluss 18 angebracht sein, insbesondere durch Verschrauben oder Verkleben. Durch die Anordnung der Messeinrichtung 20 ist sichergestellt, dass diese am Endbereich der Druckrohrleitung 12 greifbar ist und gegebenenfalls für eine mehrfache Nutzung wieder gelöst und entfernt werden kann.

Entsprechend der Darstellung von Figur 3 weist die Messeinrichtung 20 ein wasserdichtes Gehäuse 21 auf, in welchem die verschiedenen Komponenten der Messeinrichtung 20 untergebracht sind. In dem dargestellten Ausführungsbeispiel sind als Messsensoren 22 ein Drucksensor 22a und ein Temperatursensor 22b zur Messung des Druckes beziehungsweise der Temperatur des Fluids 5 vorgesehen.

Eine Energieversorgung der Messeinrichtung 20 erfolgt über einen internen Akkumulator 26, wobei ein Laden mit elektrischer Energie über einen Ladeanschluss 27 am Gehäuse 21 erfolgen kann. Der Ladeanschluss 27 kann auch für eine kabelgebundene Datenübertragung ausgebildet sein. Grundsätzlich kann auch eine kontakt- oder steckerlose Energieübertragung zu dem Akkumulator 26 erfolgen.

Über eine Datenübertragungseinheit 24 kann eine drahtlose Übertragung der von den Messsensoren 22 erfassten Messdaten über eine beabstandete zweite Datenübertragungseinheit 31 zu einer von der Druckrohrleitung 12 zentralen Rechnereinheit 30 erfolgen. Abhängig von der Datenübertragungstechnik kann hierbei eine Reichweite von einigen 100 Metern bis zu einigen Kilometern vorgesehen sein.

Weiterhin kann die Messeinrichtung 20 mit einem Datenspeicher 25 zum Speichern der erfassten Messdaten versehen sein. Über eine zentrale Prozesseinheit 28 oder eine Zeituhr, kann eine Datenübertragung zu bestimmten Zeitpunkten erfolgen. Durch eine zentrale Prozesseinheit 28 kann auch eine Messung durch die Messeinrichtung Zufuhr zu vorgegebenen Zeitpunkten vorgegeben werden.

Nach der Erfindung können insbesondere eine Vielzahl von Druckrohrleitungen 12 mit einer Messeinrichtung 20 versehen werden, welche gleichzeitig mit einer zentralen Rechnereinheit 30 in Verbindung stehen, so dass eine zentrale Prüfung und Analysierung der Messdaten hinsichtlich möglicher Undichtigkeiten der einzelnen Druckrohrleitungen 12 effizient erfolgen kann.

Datenübertragungseinheit 31 zu einer von der Druckrohrleitung 12 zentralen Rechnereinheit 30 erfolgen. Abhängig von der Datenübertragungstechnik kann hierbei eine Reichweite von einigen 100 Metern bis zu einigen Kilometern vorgesehen sein.

Weiterhin kann die Messeinrichtung 20 mit einem Datenspeicher 25 zum Speichern der erfassten Messdaten versehen sein. Über eine zentrale Prozesseinheit 28 oder eine Zeituhr, kann eine Datenübertragung zu bestimmten Zeitpunkten erfolgen. Durch eine zentrale Prozesseinheit28 kann auch eine Messung durch die Messeinrichtung Zufuhr zu vorgegebenen Zeitpunkten vorgegeben werden.

Nach der Erfindung können insbesondere ein Vielzahl von Druckrohrleitungen 12 mit einer Messeinrichtung 20 versehen werden, welche gleichzeitig mit einer zentralen Rechnereinheit 30 in Verbindung stehen, so dass eine zentrale Prüfung und Analysierung der Messdaten hinsichtlich möglicher Undichtigkeiten der einzelnen Druckrohrleitungen 12 effizient erfolgen kann.

## Patentansprüche

1. Verfahren zum Prüfen mindestens einer Druckrohrleitung (12), bei dem
- an einem Ende der Druckrohrleitung (12) eine Messeinrichtung (20) mit mindestens einem Messsensor (22) und einer drahtlosen Datenübertragungseinheit (24) angebracht wird,
- *an dem anderen Ende der Druckrohrleitung (12) eine Befülleinrichtung (40, 42) angebracht wird,* und
- die Druckrohrleitung (12) mit einem Fluid (5) befüllt und unter Druck gesetzt wird,
- wobei mit der Messeinrichtung (20) zumindest ein Druck in der Druckrohrleitung (12) erfasst und kontinuierlich oder zu vorgegebenen Zeitpunkten erfasste Messdaten an eine beabstandete zentrale Rechnereinheit (30) drahtlos übertragen werden,
**dadurch gekennzeichnet,**
- ***dass*** *die Messeinrichtung (20) bereits beim Einbringen der Druckrohrleitung (12) in einen Boden eingesetzt wird.*

2. Verfahren nach Anspruch 1,
**dadurch gekennzeichnet,**
**dass** die Messeinrichtung (20) mit einem Datenspeicher (25) und einem Akkumulator (26) zur Energieversorgung versehen ist, wobei Messdaten in dem Datenspeicher (25) zwischengespeichert und zu bestimmten Zeitpunkten übertragen werden.

3. Verfahren nach Anspruch 1 oder 2,
**dadurch gekennzeichnet,**
**dass** mittels der Messeinrichtung (20) die Temperatur und/oder weitere Zustandsparameter zu dem befüllten Fluid (5) und/oder der Druckrohrleitung (12) erfasst werden.

4. Verfahren nach einem der Ansprüche 1 bis 3,
**dadurch gekennzeichnet,**
**dass** eine Vielzahl von Druckrohrleitungen (12) mit jeweils einer Messeinrichtung (20) versehen und geprüft wird.

5. Verfahren nach einem der Ansprüche 1 bis 4,
**dadurch gekennzeichnet,**
**dass** über die zentrale Rechnereinheit (30) die mindestens eine Messeinrichtung (20) zur Messung und/oder Datenübertragung veranlasst wird und dass durch die zentrale Rechnereinheit (30) analysiert wird, ob eine Undichtigkeit in der Druckrohrleitung (12) gegeben ist.

6. Verfahren nach einem der Ansprüche 1 bis 5,
**dadurch gekennzeichnet,**
**dass** *mehrere* Druckrohrleitungen (12) im Boden, insbesondere als Teil einer Geothermieanlage, ausgebildet werden.

7. Verfahren nach einem der Ansprüche 1 bis 6,
**dadurch gekennzeichnet,**
**dass** die mindestens eine Messeinrichtung (20) mit einer Schutzabdeckung (17) versehen wird.

8. Verfahren nach einem der Ansprüche 1 bis 7,
**dadurch gekennzeichnet,**
**dass** die Messeinrichtungen (20) einer Vielzahl von Druckleitungen (12) entfernt und die Druckleitungen (12) zu einem Druckrohrleitungssystem verbunden werden.

## Claims

1. Method for testing at least one pressurised pipeline (12), in which
- a measuring device (20) with at least one measuring sensor (22) and a wireless data transmission unit (24) is attached to one end of the pressurised pipeline (12),
- a filling device (40, 42) is attached to the other end of the pressurised pipeline (12), and
- the pressurised pipeline (12) is filled with a fluid (5) and pressurised,
- wherein at least one pressure in the pressurised pipeline (12) is detected by the measuring device (20) and measurement data recorded continuously or at predetermined times is transmitted wirelessly to a central computer unit (30) located at a distance,
**characterised in that**
- the measuring device (20) is already inserted when the pressurised pipeline (12) is inserted into a ground.

2. Method according to claim 1,
**characterised in that**
the measuring device (20) is provided with a data memory (25) and an accumulator (26) for power supply, wherein measurement data is temporarily stored in the data memory (25) and transmitted at specific times.

3. Method according to claim 1 or 2,
**characterised in that**
the temperature and/or other condition parameters relating to the filled fluid (5) and/or the pressurised pipeline (12) are detected by means of the measuring device (20).

4. Method according to any one of claims 1 to 3,
**characterised in that**
a plurality of pressurised pipelines (12) are each provided with a measuring device (20) and tested.

5. Method according to any one of claims 1 to 4,
**characterised in that**
the central computer unit (30) is used to initiate the at least one measuring device (20) for measurement and/or data transmission, and
**in that** the central computer unit (30) analyses whether there is a leak in the pressurised pipe (12).

6. Method according to any one of claims 1 to 5,
**characterised in that**
*a plurality of* pressurised pipelines (12) are configured in the ground, in particular as part of a geothermal system.

7. Method according to any one of claims 1 to 6,
**characterised in that**
the at least one measuring device (20) is provided with a protective cover (17).

8. Method according to any one of claims 1 to 7,
**characterised in that**
the measuring devices (20) of a plurality of pressurised pipelines (12) are removed and the pressurised pipelines (12) are connected to a pressurised pipeline system.

## Revendications

1. Procédé de contrôle d'au moins une conduite sous pression (12), dans lequel
- un dispositif de mesure (20) avec au moins un capteur de mesure (22) et une unité de transmission de données sans fil (24) est installé à une extrémité de la conduite sous pression (12),
- à l'autre extrémité de la conduite sous pression (12), un dispositif de remplissage (40, 42) est installé, et
- la conduite sous pression (12) est remplie d'un fluide (5) et mise sous pression,
- au moins une pression dans la conduite sous pression (12) étant détectée par le dispositif de mesure (20) et des données de mesure détectées en continu ou à des moments prédéterminés étant transmises sans fil à une unité centrale de calcul (30) distante,
**caractérisé en ce que**
- le dispositif de mesure (20) est déjà utilisé lors de la mise en place de la conduite sous pression (12) dans un sol.

2. Procédé selon la revendication 1,
**caractérisé en ce que**
le dispositif de mesure (20) est muni d'une mémoire de données (25) et d'un accumulateur (26) pour l'alimentation en énergie, des données de mesure étant stockées temporairement dans la mémoire de données (25) et transmises à des moments déterminés.

3. Procédé selon la revendication 1 ou 2,
**caractérisé en ce que**
la température et/ou d'autres paramètres d'état relatifs au fluide (5) rempli et/ou à la conduite sous pression (12) sont détectés au moyen du dispositif de mesure (20).

4. Procédé selon l'une quelconque des revendications 1 à 3,
**caractérisé en ce qu'**
une pluralité de conduites sous pression (12) sont munies chacune d'un dispositif de mesure (20) et sont contrôlées.

5. Procédé selon l'une quelconque des revendications 1 à 4,
**caractérisé en ce que**
l'unité centrale de calcul (30) ordonne à l'au moins un dispositif de mesure (20) d'effectuer des mesures et/ou de transmettre des données, et
**en ce que** l'unité de calcul centrale (30) analyse s'il y a un manque d'étanchéité dans la conduite sous pression (12).

6. Procédé selon l'une quelconque des revendications 1 à 5,
**caractérisé en ce que**
*plusieurs* conduites sous pression (12) sont réalisées dans le sol, notamment en tant que partie d'une installation géothermique.

7. Procédé selon l'une quelconque des revendications 1 à 6,
**caractérisé en ce que**
l'au moins un dispositif de mesure (20) est muni d'un couvercle de protection (17).

8. Procédé selon l'une quelconque des revendications 1 à 7,
**caractérisé en ce que**
les dispositifs de mesure (20) d'une pluralité de conduites sous pression (12) sont retirés et les conduites sous pression (12) sont reliées en un système de conduites sous pression.
